(19) Europäisches Patentamt
European Patent Office
Office européen des brevets

(11) **EP 1 726 082 B1**

(12) **EUROPÄISCHE PATENTSCHRIFT**

(45) Veröffentlichungstag und Bekanntmachung des Hinweises auf die Patenterteilung:
**05.08.2009 Patentblatt 2009/32**

(21) Anmeldenummer: **05708074.9**

(22) Anmeldetag: **07.03.2005**

(51) Int Cl.:
*H02K 33/16* *(2006.01)*      *H02K 33/18* *(2006.01)*
*H02K 41/03* *(2006.01)*      *H02K 41/035* *(2006.01)*
*F04B 35/04* *(2006.01)*

(86) Internationale Anmeldenummer:
**PCT/EP2005/050998**

(87) Internationale Veröffentlichungsnummer:
**WO 2005/086327 (15.09.2005 Gazette 2005/37)**

(54) **VORRICHTUNG ZUR REGELUNG DES ANKERHUBS IN EINEM REVERSIERENDEN LINEARANTRIEB**

DEVICE FOR ADJUSTING THE ARMATURE STOKE IN A REVERSIBLE LINEAR DRIVE UNIT

DISPOSITIF POUR REGLER LE TRAJET D'ARMATURE DANS UN MECANISME D'ENTRAINEMENT LINEAIRE REVERSIBLE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **05.03.2004 DE 102004010846**

(43) Veröffentlichungstag der Anmeldung:
**29.11.2006 Patentblatt 2006/48**

(73) Patentinhaber: **BSH Bosch und Siemens Hausgeräte GmbH**
**81739 München (DE)**

(72) Erfinder: **REINSCHKE, Johannes**
**90419 Nürnberg (DE)**

(56) Entgegenhaltungen:
**US-A- 5 736 797          US-A- 5 980 211**
**US-A1- 2002 121 816**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung bezieht sich auf eine Vorrichtung zur Regelung des Ankerhubs in einem reversierenden Linearantrieb, der mindestens eine mit einem Erregerwicklungsstrom zu beaufschlagende Erregerwicklung und einen magnetischen Anker enthält, der von einem Magnetfeld der Erregerwicklung in eine lineare, in einer axialen Richtung mit dem vorgegebenen Ankerhub oszillierende Bewegung zu versetzen ist. Ein entsprechender Linearantrieb geht aus der JP 2002-031054 A hervor.

Entsprechende Linearantriebe werden insbesondere dafür eingesetzt, Pumpkolben von Verdichtern in eine lineare, oszillierende Bewegung bzw. Schwindung zu versetzen. Das System aus einem derartigen Verdichter mit zugeordneter Linearantrieb wird deshalb auch als Linearverdidhter bzw. -kompressor bezeichnet (vgl. die eingangs genannte JP-A-Schrift). Bei entsprechenden bekannten Linearverdiditern bildet der gegebenenfalls über wenigstens ein Federelement aufgehängte, schwingungsfähige Anker ein Feder-Masse-System, das für eine bestimmte Schwingungsfrequenz bei gegebener Kraft-Weg-Kennlinie des Verdichters ausgelegt ist.

Es sind verschiedene Verfahren zu einer Ankerpositionsregelung oder zu einer Ankerhubregelung in einem entsprechenden Linearverdichiter bekannt. Bei den bekannten Verfahren wird jedoch in der Regel für eine Regelung des Ankerhubs auf eine direkte, kontinuierliche Ankerpositionsmessung verzichtet.

Zu einer Erfassung der aktuellen Ankerposition wird bisher entweder diese nichtkontinuierlich festgestellt, z.B. diskontinuierlich durch Schließen eines elektrischen Kontaktes, wenn der Anker eine bestimmte Position erreicht hat. Auch eine kontinuierliche Positionsmessung ist bekannt, z.B. über die in der Erre-gerwicklung induzierte Spannung. Das Dokument US 5980211 sohlägt die Verwendung eines Positionssensors vor.

Aufgabe der vorliegenden Erfindung ist es, die Regelungsvorrichtung mit den eingangs genannten Merkmalen dahingehend auszubilden, dass eine genaue Einstellung des Ankerhubs ermöglicht wird.

Diese Aufgabe wird mit den in Anspruch 1 angegebenen Maßnahmen gelöst. Demgemäß soll die Regelungsvorrichtung

- Mittel zur Erfassung der aktuellen Ankerposition,
- Mittel zur Messung des aktuellen Erregerwicklungsstroms und
- Mittel zur Einstellung des Erregerwicklungsstromes derart aufweisen, dass im eingeschwungenen Zustand des Ankers während jeder Halbwelle der Ankerbewegung dem Anker elektrisch genau so viel Energie zugeführt wird, dass die Schwingungsamplituden des vorgegebenen Ankerhubs gerade erreicht werden.

Bei den erfindungsgemäßen Maßnahmen wird von der Überlegung ausgegangen, dass zur Erreichung eines gewünschten Ankerhubs, der sich aus den beiden Schwingungsamplituden zusammensetzt, pro Halbwelle dem Anker elektrisch eine gewisse Energiemenge zugeführt werden muss, und zwar während einer Expansionshalbwelle zur Vorspannung des wenigstens eines eventuell vorhandenen Federelementes, und während einer Kompressionshalbwelle zum Verrichten mechanischer Arbeit an dem Anker und an einem eventuell mit ihm verbundenen, beweglichen Verdichterteil. Selbst im eingeschwungenen Zustand sind die für die Kompressions- und Expansionshalbwellen benötigten Energiemengen in der Regel verschieden und nicht von vornherein bekannt. Beide Werte müssen statt dessen aus den tatsächlich sich einstellenden Schwingungsamplituden geschätzt werden.

Die Grundüberlegung des erfindungsgemäßen Regelungskonzeptes besteht nun darin, dass eine (quasi) kontinuierliche Ankerpositionsmessung nicht nur die Messung des Ankerhubs, d.h. des Maximalausschlages, sondern auch eine Messung des elektrischen Energieeintrags in den Anker gestattet. Dies ist möglich, weil der elektrische Energieeintrag proportional zum Integral des Spulenstroms über die Ankerposition ist. Pro Halbwelle wird zum Zeitpunkt, zu dem genügend Energie elektrisch in den Anker eingeprägt worden ist, der Spulenstrom abgeschaltet. Mit jeder Richtungsumkehr des Ankers wird der Spulenstrom wieder zugeschaltet, wobei das Vorzeichen so ist, dass die Richtung der elektromagnetischen Kraft auf den Anker und dessen Bewegungsrichtung übereinstimmen. Daran schießen sich die Energiemessung und nachgelagert die Stromabschaltung von neuem an.

Zusätzlich zu der Orts-/Positionsmessung kann pro Halbwelle an mindestens einer festen Position, einer sogenannten Triggerposition, die Geschwindigkeit und damit die kinetische Energie des Ankers bestimmt werden. Dabei wird bevorzugt die Triggerposition im Bereich der maximalen Geschwindigkeit des Ankers festgelegt. Für die Geschwindigkeitsmessung muss kein separater Sensor verwendet werden, sondern sie lässt sich aus der quasi kontinuierlichen Ortsmessung durch Differenziation ableiten. Weiterhin ist aus der Geschwindigkeitserfassung die Ermittlung der im Anker gespeicherten Energie möglich.

Während der Expansionshalbwelle lassen sich aus den Orts- und Geschwindigkeitsmessungen an der mindestens einen Triggerposition, der Positionsmessung des von einem Verdichter abgewandten Totpunktes, an dem die Expansionshalbwelle endet, und der Messung der elektrisch in den Anker eingeprägten Energie Linearbetriebsparameter wie z.B. eine Federkonstante oder die Strom-Kraft-Übertragungskonstante abschätzen. Während der Kompressionshalbwelle lassen sich aus den entsprechenden Messungen Kompressorparameter wie die im Verdichter pro Zyklus verbrauchte mechanische Energie, die Differenz aus Ausblas- und Ansaugdruck am Verdichters und/oder die Kraft-Weg-Kenn□linie des Verdichters bestimmen.

Mit dem erfindungsgemäßen Regelungskonzept sind folglich ein sicheres Anfahren eines Linearverdichters sowie ein sicherer Betrieb unter schwankenden äußeren Bedingungen, d.h. bei Schwankungen in der Kompressorkennlinie, möglich. Dabei ist mit "sicher" gemeint, dass der Kolben des Kompressors in der Kompressionsphase nicht überschwingt und an eine Kolbenplatte oder Ventilplatte anschlagen kann. Ferner kann mit dem Regelungskonzept das sogenannte Totvolumen des Kompressionsraumes des verbundenen Linearverdichters sehr genau geregelt werden; dies ist Grundvoraussetzung für einen hohen Gesamtwirkungsgrad, beispielsweise einer Kühlleistung, des Linearverdichters.

Weitere vorteilhafte Ausgestaltungen der erfindungsgemäßen Regelungseinrichtung gehen aus abhängigen Ansprüchen hervor. Dabei kann die Ausführungsform nach Anspruch 1 mit den Merkmalen eines der Unteransprüche oder vorzugsweise auch mit denen aus mehreren Unteransprüchen kombiniert werden. Demgemäß können für die Regelungsvorrichtung zusätzlich noch folgende Merkmale vorgesehen werden:

- So können die Stromeinstellungsmittel als Stellglied der Stromregelung eine Gleichrichterschaltung und eine nachgeordnete Brückenschaltung mit stellbaren Brückengliedern in sogenannter H-Anordnung umfassen. Dabei können bevorzugt als stellbare Brückenglieder MOSFETs vorgesehen sein.
- Vorteilhaft ist der gemessene Enregerwicklungsstrom als eine Ist-Strom-Eingangsgröße einem den Brückengliedern zugeordneten Stromreglerbaustein zuzuführen, der die Brückenglieder so schaltet, dass das Ist-Stromsignal auf ein mit der aktuellen Ankerposition korreliertes, von einem Positionsreglerbaustein generiertes Soll-Stromsignal abgestimmt ist, vorzugsweise diesem folgt. Gegebenenfalls ist dabei dem Positionsreglerbaustein auch das Ist-Stromsignal zuzuführen.
- Statt der vorerwähnten Geschwindigkeits- und Energiebestimmung des Ankers mit Hilfe mindestens einer festen Triggerpasition können besonders vorteilhaft auch Mittel zu einer kontinuierlichen Erfassung der Geschwindigkeit des Ankers(8) vorgesehen sein. Dabei lässt sich mit Hilfe entsprechender Mittel aus der Geschwindigkeitserfassung die im Anker gespeicherte Energie ableiten.
- Außerdem können auch Mittel zu einer Regelung der Schwingungsfrequenz des Ankers vorgesehen sein. Diese Mittel können die Signale der Positions - und gegebenenfalls der Geschwindigkeitsmessung ausnutzen.

Weitere vorteilhafte Ausgestaltungen der erfindungsgemäßen Regelungseinriditung gehen aus den vorstehend nicht angesprochenen Unteransprüchen hervor.

Die Erfindung wird nachfolgend anhand bevorzugter Ausführungsbeispiele unter Bezugnahme auf die Zeichnung noch weiter erläutert. Von deren Figuren zeigen

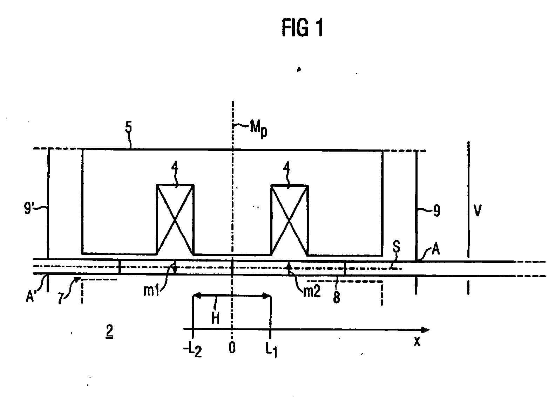

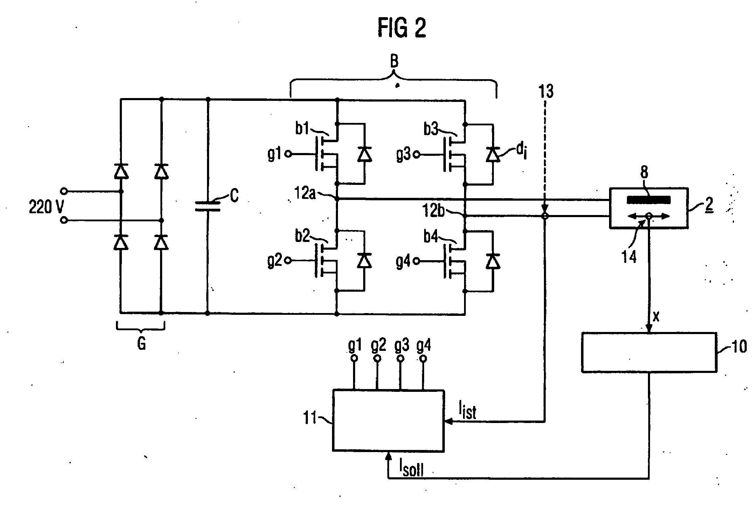

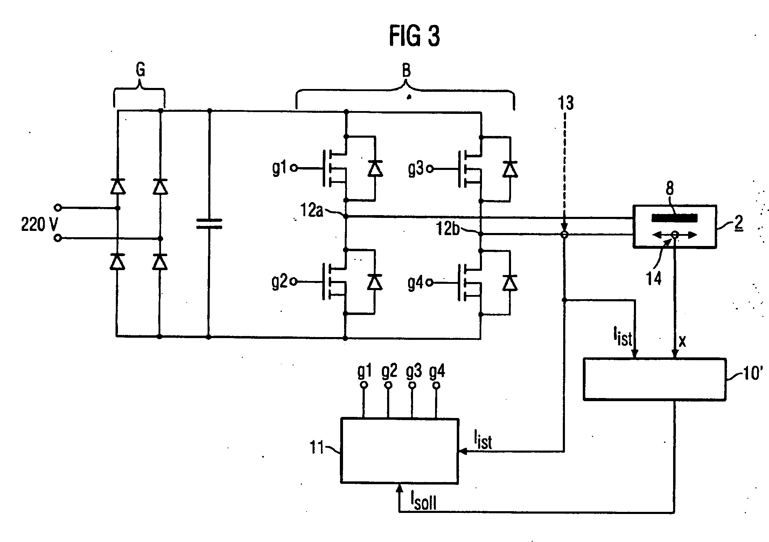

Figur 1 stark schematisiert im Querschnitt einen Teil durch eine an sich bekannte lineare Linearantrieb,

deren Figur 2 ein Blockschaltbild einer ersten Ausführungsform einer Regelungsvorrichtung nach der Erfindung und

deren Figur 3 ein Blockschaltbild einer weiteren Ausführungsform einer solchen Regelungsvorrichtung.

In den Figuren sind sich entsprechende Teile jeweils mit denselben Bezugszeichen versehen.

Bei der in Figur 1 angedeuteten linearen Linearantrieb wird von an sich bekannten Ausführungsformen ausgegangen, wie sie für Linearverdichter vorgesehen werden (vgl. die eingangs genannte JP-A-Schrift). Die Figur zeigt schematisch im Wesentlichen nur den oberen Teil eines Querschnitts durch eine solche Linearantrieb 2; d.h., in der Figur sind nur die Einzelheiten dargestellt, die sich auf einer Seite einer Symmetrieachse ober -ebene S, die sich in einer axialen Bewegungsrichtung erstreckt, befinden. Die Linearantrieb 2 umfasst mindestens eine Erregerwicklung 4, der wenigstens ein magnetflussführender Jochkörper 5 zugeordnet ist. In einer zentralen, kanalartigen oder schlitzartigen Öffnung 7 dieses Jochkörpers befindet sich ein magnetischer Anker oder Ankerteil mit beispielsweise zwei Permanentmagneten, deren Magnetisierungsrichtungen durch gepfeilte Linien m1 und m2 angedeutet sind. Der auch als "Ankerschlitten" bezeichnete Anker weist axial seitliche, nicht näher ausgeführte Verlängerungteile auf. Er kann in dem magnetischen Wechselfeld der Wicklung 4 in axialer Richtung eine oszillierende Bewegung ausführen, wobei er um eine Mittenposition Mp schwingt. Die maximale Auslenkung aus der Mittenposition in axialer Richtung x, d.h. die Schwingungsamplitude, ist mit $+L_1$ bzw. $-L_2$ bezeichnet. Der Ankerhub H ist folglich $(L_1 + L_2)$.

Wie ferner in der Figur angedeutet ist, können gegebenenfalls zwei ortsfest eingespannte Blattfedern 9 und 9' zu beiden Seiten der Mittenposition Mp an verlängerten Teilen des Ankers 8 mit ihren schwingungsfähigen Angriffspunkten A bzw. A' angreifen. Selbstverständlich sind auch Ausführungsformen einer Linearantrieb ohne Federn möglich. Ferner kann vorteilhaft an zumindest einer Seite des Verlängerungsteils des Ankers 8 dieser starr mit einem in der Figur nicht näher dargestellten Verdichter V bzw. dessen Pumpkolben verbunden sein.

Bei der in der Figur dargestellten Ausführungsform wurde ferner davon ausgegangen, dass die Linearantrieb 2 symmetrisch zu der Ebene S aufgebaut ist, d.h., dass, zu beiden Seiten der Ebene sich Jochkörper und gegebenenfalls auch Erregerwicklungteile befinden. Selbstverständlich kann man für eine erfindungsgemäße Regelungsvorrichtung auch eine Linearantrieb vorsehen, die nur auf einer Seite eine Erregerwicklung und gegebenenfalls auf der gegenüberliegenden Seite nur einen magnetflussführenden Jochkörperteil (vgl. z.B.

US 6 323 568 B1) besitzt. Neben der dargestellten E-Form des Jochkörpers sind auch andere Jochkörpertypen wie z.B. mit M-Form geeignet.

Bei einer Verbindung des Ankers 8 der Linearantrieb 2 mit einem Pumpkolben eines Verdichters V ist der Ankerenergieschwellwert $E_s$ für die Expansions- und die Kompressionshalbwelle im Allgemeinen verschieden; d.h., es sind eigentlich zwei Ankerenergieschwellwerte, nämlich $E_{s,exp}$ und $E_{s,comp}$, zu unterscheiden. Diese beiden Ankerenergieschwellwerte ändern sich zeitlich aufgrund der zeitlichen Änderungen der Kraft-Weg-Kennlinie des Verdichters, wobei die Änderungen langsam im Vergleich zur Schwingungsperiodendauer der Linearantrieb sind. Aus diesem Grunde ist eine der eigentlichen Hubregelung überlagerte Adaption beider Werte sinnvoll und möglich.

Zur Regelung des Ankerhubs H bzw. der Schwingungsamplituden $+L_1$ und $-L_2$ dient eine Regelungsvorrichtung, mit der der Strom in der Erregerwicklung 4 eingestellt wird. Das Blockschaltbild einer ersten Ausführungsform einer solchen Regelungsvorrichtung geht aus Figur 2 hervor. In der Figur sind bezeichnet

mit G eine Gleichrichterschaltung z.B. in Form einer Brückenschaltung,

- mit C ein Glättungskondensator,
- mit B eine Konverterschtaltung in Form einer sogenannten Voll-Brücke,
- mit b1 bis b4 die vier Brückenglieder dieser Konverterschaltung in sogenannter H-Anordnung,
- mit 10 ein Positionsreglerbaustein und
- mit 11 ein Stromreglerbaustein.

Als Brückenglieder b1 bis b4 kommen insbesondere MOSFETs (Metal Oxide Semicoductor Field Effect Transistors) mit Schutzdioden $d_i$ in Frage. Ihre Steuerelektroden bzw. Steuergates sind mit g1 bis g4 bezeichnet. Sie sind mit entsprechenden Ausgängen des Stromreglerbausteins 11 verbunden. An Brückenabgriffpunkten 12a und 12b der Brückenschaltung B wird der Erregerstrom für die Erregerwicklung der Linearantrieb 2 abgenommen. Dabei erfolgt eine Bestimmung eines mit $I_{ist}$ bezeichneten Ist-Stromes der Wicklung durch Messung des Spannungsabfalls über

- einem im Brückenpfad mit der Wicklung in Serie geschalteten Shunt-Widerstands, oder
- zwei Shunt-Widerstände, die sich zwischen den Brückengliedern $b_2$ und $b_4$ und Masse befinden.

Die Messgröße dieses Stromes wird dann dem Stromregler 11 an einem Anschlusspunkt 13 in der Stromzuführungsleitung der Erregerwicklung zugeführt. Bei dem Stromregler 11 kann es sich beispielsweise um einen bekannten PWM( Pulse Width Modulation)-Baustein handeln. Alternativ lässt sich auch als Stromregler ein an sich bekannter Zweipunktregler mit fester Taktfrequenz von z.B. 20 kHz verwenden.

An der Linearantrieb 2 ist eine nicht näher ausgeführte, an sich bekannte Messeinrichtung 14 angebracht, mit der die genaue aktuelle Position x und die Bewegungsrichtung des Ankers 8 der Apparatur zu detektieren ist. Deren Messwert x wird dem Positionsreglerbaustein 10 zugeführt, der aus der Position x und daraus abgeleiteter Größen wie insbesondere der Ankergeschiwindigkeit einen Soll-Strom $I_{soll}$ errechnet und diesen dem Stromreglerbaustein 11 zuführt. Der Stromreglerbaustein sorgt dann dafür, dass mittels Ansteuerung der Steuergates g1 bis g4 eine gute Übereinstimmung zwischen dem Soll-Strom $I_{soll}$ und dem Ist-Strom $I_{ist}$ gegeben ist.

Das in Figur 3 wiedergegebene Blockschaltbild einer weiteren erfindungsgemäßen Regelungsvorrichtung unterscheidet sich von dem nach Figur 2 lediglich dadurch, dass hier der gemessene Strom $I_{ist}$ auch Eingangsgröße für den gegenüber Figur 2 modifizierten Positionsreglerbaustein 10' ist. Bei dieser Ausführungsform können zwar deutlichere Abweichungen zwischen dem Soll-Strom $I_{soll}$ und dem Ist-Strom $I_{ist}$ auftreten; der Stromreglerbaustein 11 ist jedoch auch hier durch entsprechende Einstellungen in der Lage, den Strom in der gewünschten Weise abzuschalten.

Nachfolgend ist der Algorithmus für eine Positionsregelung bei den Vorrichtungen nach den Blockschaltbildern gemäß den Figuren 2 und 3 angedeutet:

- Die auf dem Anker 8 wirkende elektromagnetische Kraft F ist stets proportional zum Ist-Spulenstrom $I_{ist}$; d.h.

$F = K \cdot I_{ist}$, wobei F, k und $I_{ist}$ von der Position x abhängen.

- Bei Änderung der Bewegungsrichtung des Ankers wird der Spulenstrom umgekehrt, so dass dann die elektromagnetische Kraft $F = K \cdot \_ I_{ist}$ in Bewegungsrichtung x wirkt.
- Entweder kontinuierlich oder mit Hilfe mindestens eines besonderen Triggersignals, das z.B. dem Nulldurchgang der Ankerbewegung zugeordnet ist und vorteilhaft in der Nähe der Ankerposition mit der maximalen kinetischen Energie liegt, werden die potentielle und die kinetische Energie des Ankers aus der momentanen Positions- und Geschwindigkeitsmessung bestimmt.
- Die pro Schwingungshalbwelle dem Anker zugeführte Energie wird berechnet über die Gleichung

$$\int F(x)dx = \int K(x)I(x)\, dx.$$

- Erreicht die Ankerenergie einen Schwellwert $E_{s,comp}$ bzw. $E_{s,exp}$, der der gewünschten Schwingungsamplitude $+L_1$ bzw $-L_2$ entspricht, wird der Strom I abgeschaltet.

Neben diesem Grundalgorithmus ist ein überlagerter Adaptionsalgorithmus denkbar, bei dem durch Vergleich der gemessenen Schwingungsamplitude $+L_1$ bzw. $-L_2$ mit der entsprechenden Soll-Amplitude der Ankerenergieschwellwert $E_{s,comp}$ bzw. $E_{s,exp}$ adaptiert wird.

Das in den Blockschaltbildern realisierte Regelungskonzept weist also folgende Hauptelemente auf:

1. Messgrößen:

Position x, Bewegungsrichtung und daraus abgeleitet die Geschwindigkeit des Ankers 8; Strom $I_{ist}$.

2. Stellgröße:

Erregerspulenstrom. Hier sind mehrere Stellgliedvarianten für die Stromregelung denkbar, wobei abhängig vom Stellglied Ist- und Soll-Strom unterschiedlich stark voneinander abweichen können.

3. Regelungsprinzip:

Erregerwicklungsstrom wird so geschaltet, dass die elektromagnetische Kraft auf den Anker (fast) immer in Ankerbewegungsrichtung wirkt; Messung der elektrisch in den Anker pro Schwingungahalbwelte eingeprägten Energie; Stromabschaltung, wenn Energieschwellwert erreicht ist.

Vorteile dieses Regelungsprinzips:

Ein elektrisches Bremsen des Ankers wird weitgehend vermieden; daraus folgt ein guter Wirkungsgrad.
Die Frequenz der Ankerschwingung ist zwar weitgehend durch bewegte Masse sowie Federkonstante eventuell vorhandener Feder(n) und Kraft-Weg-Kennlinie des verbundenen Verdichters festgelegt, kann aber durch Wahl des duty cycle mittels Stromregelung modifiziert werden: Wirkt nach einer Bewegungsumkehr ein höherer Strom über ein kürzeres Wegstück, so erhöht sich - bei gleichbleibendem elektrischen Energieeintrag pro Schwingungshalbwelle _ die Schwingungsfrequenz.

Bezugszeichenliste
2 Linearantrieb
4 Erregerwicklung
5 Jochkörper
7 Spalt
8 Anker
9, 9' Federelemente
10, 10' Positionsreglerbaustein
11 Stromreglerbaustein
12a, 12b Brückenabgriffpunkte
13 Anschlusspunkt
S Symmetrieebene
m1, m2 Magnetisierungsrichtungen
A, A' Federangriffspunkte
H Ankerhub
x axiale Position
$+L_1$, $-L_2$ Schwingungsamplituden
V Verdichter
Mp Mittenposition
G Gleichrichterschaltung
C Glättungskondensator
B Brückenschaltung
b1 bis b4 MOSFET-Brückenglieder
g1 bis g4 Steuergates
$d_i$ Schutzdioden
$I_{ist}$ Ist-Strom
$I_{soll}$ Soll-Strom

**Patentansprüche**

1. Vorrichtung zur Regelung des Ankerhubs (H) in einem reversierenden Linearantrieb (2), die mindestens eine mit einem Erregerwicklungsstrom zu beaufschlagende Erregerwicklung (4) und einen magnetischen Anker (8) enthält, der von einem Magnetfeld der Erregerwicklung (4) in eine lineare, in einer axialen Richtung mit dem vorgegebenen Ankerhub (H) oszillierende Bewegung zu versetzen ist, mit Mitteln zur Erfassung der aktuellen Ankerposition (x), mit Mitteln zur Messung des aktuellen Erregerwicklungsstromes ($I_{ist}$) und mit Mitteln zur Einstellung des Erregerwicklungsstromes ($I_{soll}$) derart, dass im eingeschwungenen Zustand des Ankers (8) während jeder Halbwelle der Ankerbewegung dem Anker (8) elektrisch genau so viel Energie zugeführt wird, dass die Schwingungsamplituden (+L1, -L2) des vorgegebenen Ankerhubs (H) gerade erreicht werden, **dadurch gekennzeichnet, dass** für jede Halbwelle der Ankerbewegung die dem Anker (8) zugeführte Energie bestimmt wird, dass für jede Halbwelle der Ankerbewegung jeweils ein Ankerenergieschwellwert ($E_{s,exp}$, $E_{s,comp}$) festgelegt ist, und dass für jede Halbwelle der Ankerbewegung der Erregerwicklungsstrom abgeschaltet wird, sobald die dem Anker (8) zugeführte Energie den zugehörigen Ankerenergieschwellwert ($E_{s,exp}$, $E_{s,comp}$) erreicht.

2. Vorrichtung nach Anspruch 1, **dadurch gekennzeichnet, dass** der Anker (8) schwingungsfähig über wenigstens ein Federelement (9, 9') gehalten ist.

3. Vorrichtung nach Anspruch 1 oder 2, **dadurch gekennzeichnet, dass** die Stromeinstellungsmittel als Stellglied der Stromregelung eine Gleichrichterschaltung (G) und eine nachgeordnete Brückenschaltung (B) mit stellbaren Brückengliedern (b1 bis b4) in H-Anordnung umfassen.

4. Vorrichtung nach Anspruch 3, **dadurch gekennzeichnet, dass** die stellbaren Brückenglieder (b1 bis b4) MOSFETs sind.

5. Vorrichtung nach Anspruch 3 oder 4, **dadurch gekennzeichnet, dass** der gemessene Erregerwicklungsstrom als eine Ist-Strom-Eingangsgröße ($I_{ist}$) einem den Brückengliedern (b1 bis b4) zugeordneten Stromreglerbaustein (11) zuzuführen ist, der die Brückenglieder so schaltet, dass das Ist-Stromsignal ($I_{ist}$) auf ein mit der aktuellen Ankerposition (x) korrelierten, von einem Positionsregelbaustein (10, 10') generiertes Soll-Stromsignal ($I_{Soll}$) abgestimmt ist, vorzugsweise diesem folgt.

6. Vorrichtung nach Anspruch 5, **dadurch gekennzeichnet, dass** dem Positionsregelbaustein (10') auch das Ist-Stromsignal ($I_{ist}$) zuzuführen ist.

7. Vorrichtung nach einem der vorangehenden Ansprüche, **dadurch gekennzeichnet, dass** Mittel zu einer Erfassung der Bewegungsrichtung des Ankers (8) vorgesehen sind.

8. Vorrichtung nach einem der vorangehenden Ansprüche, **dadurch gekennzeichnet, dass** Mittel zu einer kontinuierlichen Erfassung der Geschwindigkeit des Ankers(8) vorgesehen sind.

9. Vorrichtung nach einem der Ansprüche 1 bis 8, **dadurch gekennzeichnet, dass** an mindestens einer festen Stelle innerhalb des Ankerhubweges eine Triggerposition zu einer Geschwindigkeitsmessung vorgesehen ist.

10. Vorrichtung nach Anspruch 9, **dadurch gekennzeichnet, dass** die Triggerposition im Bereich der maximalen Geschwindigkeit des Ankers (8) vorgesehen ist.

11. Vorrichtung nach einem der Ansprüche 8, 9 oder 10, **dadurch gekennzeichnet, dass** Mittel zu einer Ableitung der in dem Anker (8) gespeicherten Energie aus der Geschwindigkeitserfassung vorgesehen sind.

12. Vorrichtung nach einem der vorangehenden Ansprüche, **dadurch gekennzeichnet, dass** Mittel zu einer Regelung der Schwingungsfrequenz des Ankers(8) vorgesehen sind.

13. Vorrichtung nach einem der vorangehenden Ansprüche, **dadurch gekennzeichnet, dass** der Anker (8) starr mit einem Pumpkolben eines Verdichters (V) verbunden ist.

**Claims**

1. Device for regulation of the armature stroke (H) in a reversible linear drive (2), which comprises at least one excitation winding (4), which is to be acted on by an excitation winding current, and a magnetic armature (8), which is to be set by a magnetic field of the excitation winding (4) into a linear motion oscillating in an axial direction with the predetermined armature stroke (H), with means for detecting the instantaneous armature position (x), with means for measuring the instantaneous excitation winding current ($I_{ist}$) and with means for setting the excitation winding current ($I_{soll}$) in such a manner that in the steady state of the armature (8) during each half wave of the armature movement there is electrically supplied to the armature (8) exactly that amount of energy that the oscillation amplitudes (+L1, -L2) of the predetermined armature stroke (H) are just attained, **characterised in that** the energy supplied to the armature (8) is determined for each half wave of the armature movement, that a respective armature energy threshold value ($E_{s,exp}$, $E_{s,comp}$) is fixed for each half wave of the armature movement and that the excitation winding current is switched off for each half wave of the armature movement as soon as the energy supplied to the armature (8) reaches the associated armature energy threshold value ($E_{s,exp}$, $E_{s,comp}$).

2. Device according to claim 1, **characterised in that** the armature (8) is mounted to be capable of oscillation by way of at least one spring element (9, 9').

3. Device according to claim 1 or 2, **characterised in that** the current setting means comprises as setting element of the current regulation a rectifier circuit (G) and a downstream bridge circuit (B) with settable bridge elements (b1 to b4) in H-arrangement.

4. Device according to claim 3, **characterised in that** the settable bridge elements (b1 to b4) are MOSFETs.

5. Device according to claim 3 or 4, **characterised in that** the measured excitation winding current is supplied as an actual current input magnitude ($I_{ist}$) to a current regulator module (11), which is associated with the bridge elements (b1 to b4) and which so switches the bridge elements that the actual current signal ($I_{ist}$) is matched to a target current signal ($I_{soll}$) correlated with the instantaneous armature position (x) and generated by a position regulating module (10, 10'), preferably follows this signal.

**6.** Device according to claim 5, **characterised in that** the actual current signal ($I_{ist}$) is also supplied to the position regulating module (10').

**7.** Device according to any one of the preceding claims, **characterised in that** means for detection of the movement direction of the armature (8) are provided.

**8.** Device according to any one of the preceding claims, **characterised in that** means for continuous detection of the speed of the armature (8) are provided.

**9.** Device according to any one of claims 1 to 8, **characterised in that** a trigger position for a speed measurement is provided at at least one fixed point within the armature stroke path.

**10.** Device according to claim 9, **characterised in that** the trigger position is provided in the region of the maximum speed of the armature (8).

**11.** Device according to any one of claims 8, 9 and 10, **characterised in that** means for tapping the energy, which is stored in the armature (8), from the speed detection are provided.

**12.** Device according to any one of the preceding claims, **characterised in that** means for regulation of the oscillation frequency of the armature (8) are provided.

**13.** Device according to any one of the preceding claims, **characterised in that** the armature (8) is rigidly connected with a pump piston of a compressor (V).


**Revendications**

**1.** Dispositif pour régler le trajet d'armature (H) dans un mécanisme d'entraînement linéaire réversible (2) comprenant au moins un bobinage d'excitation (4) à alimenter en courant de bobine d'excitation et une armature magnétique (8) qui par un champ magnétique de la bobine d'excitation (4) doit être entraînée dans un mouvement linéaire oscillant avec le trajet d'armature (H) prédéfini dans un sens axial, comprenant des moyens pour détecter la position actuelle de l'armature (x), des moyens pour mesurer le courant actuel de la bobine d'excitation ($I_{ist}$) et des moyens pour ajuster le courant de la bobine d'excitation ($I_{soll}$) de manière qu'en régime permanent de l'armature (8), lors de chaque demi-onde du mouvement d'armature, l'armature (8) est alimentée exactement en autant d'énergie électrique, tel que les amplitudes d'oscillation (+L1, -L2) du trajet d'armature (H) prédéfini sont obtenues, **caractérisé en ce que** pour chaque demi-onde du mouvement d'armature l'alimentation en énergie de l'armature (8) sera déterminée, **en ce que** pour chaque demi-onde du mouvement d'armature un seuil d'énergie de l'armature ($E_{s,exp}$, $E_{s,comp}$) est fixé et **en ce que** pour chaque demi-onde du mouvement d'armature le courant de la bobine d'excitation sera coupé dès que l'alimentation en énergie de l'armature (8) atteint le seuil d'énergie correspondant de l'armature ($E_{s,exp}$, $E_{s,comp}$).

**2.** Dispositif selon la revendication 1, **caractérisé en ce que** l'armature (8) est fixée de manière à pouvoir osciller, au moyen d'au moins un élément à ressort (9, 9').

**3.** Dispositif selon la revendication 1 ou 2, **caractérisé en ce que** les moyens d'ajustement du courant comprennent comme élément de réglage du courant un circuit redresseur (G) et, monté en aval, un circuit en pont (B) avec des éléments de pont réglables (b1 à b4) disposés en H.

**4.** Dispositif selon la revendication 3, **caractérisé en ce que** les éléments de pont réglables (b1 à b4) sont des MOSFETs.

**5.** Dispositif selon la revendication 3 ou 4, **caractérisé en ce que** le courant mesuré de la bobine d'excitation doit être amené en tant que grandeur d'entrée du courant effectif ($I_{ist}$) à un module régulateur de courant (11) associé aux éléments de pont (b1 à b4), lequel connecte les éléments de pont de manière à ce que le signal de courant effectif ($I_{ist}$) soit syntonisé sur, de préférence suive, un signal de courant de consigne ($I_{soll}$) corrélé avec la position actuelle de l'armature (x) et généré par un module de réglage de position (10, 10'), de préférence suive celui-ci.

**6.** Dispositif selon la revendication 5, **caractérisé en ce que** le signal de courant effectif ($I_{ist}$) doit être amené aussi au module de réglage de position (10').

**7.** Dispositif selon l'une des revendications précédentes, **caractérisé en ce que** des moyens sont prévus pour détecter le sens de mouvement de l'armature (8).

**8.** Dispositif selon l'une des revendications précédentes, **caractérisé en ce que** des moyens sont prévus pour détecter en continu la vitesse de l'armature (8).

**9.** Dispositif selon l'une des revendications 1 à 8, **caractérisé en ce qu'**à au moins un endroit fixe sur le trajet d'armature une position de déclenchement est prévue pour une mesure de vitesse.

**10.** Dispositif selon la revendication 9, **caractérisé en ce que** la position de déclenchement est prévue dans la zone de vitesse maximale de l'armature (8).

**11.** Dispositif selon l'une des revendications 8, 9 ou 10, **caractérisé en ce que** des moyens sont prévus pour déduire de la détection de vitesse l'énergie accumulée dans l'armature (8).

**12.** Dispositif selon l'une des revendications précédentes, **caractérisé en ce que** des moyens sont prévus pour régler la fréquence d'oscillations de l'armature (8).

**13.** Dispositif selon l'une des revendications précédentes, **caractérisé en ce que** l'armature (8) est connectée de manière rigide à un piston plongeur d'un compresseur (V).

**FIG 1**

FIG 2

FIG 3

EP 1 726 082 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2002031054 A
- US 5980211 A
- US 6323568 B1